# EUROPEAN PATENT SPECIFICATION

(11) **EP 2 250 865 B1**
(45) Date of publication and mention of the grant of the patent: **28.03.2012**
(21) Application number: 10162237.1
(22) Date of filing: 07.05.2010
(51) Int. Cl.: A01B 33/02, A01B 33/08, F16H 7/14

(54) **A motorised agricultural tool**
Motorisiertes landwirtschaftliches Arbeitsgerät
Outil agricole motorisé

(30) Priority: 15.05.2009 IT RE20090045
(43) Date of publication of application: 17.11.2010
(73) Proprietor: Eurosystems S.p.A., 42045 Luzzara (Reggio Emilia) (IT)
(72) Inventor: Bovi, Fabio, 42045, LUZZARA (REGGIO EMILIA) (IT)
(74) Representative: Corradini, Corrado

(56) References cited:
- EP-A1- 1 260 272
- WO-A1-2006/118904
- DE-A1- 3 339 309
- GB-A- 1 224 406

## Description

The invention relates in general to motorised agricultural tools which are used for working small land allotments, mainly for horticultural purposes or for gardens.

An example of these agricultural tools is provided by tools known as walking tractors.

A walking tractor is a small self-propelling machine guided by a user on foot, which can be used for various tasks, among which threshing, hoeing, tilling, weeding, ploughing or drawing small trailers.

A walking tractor generally comprises a bearing frame provided with drive wheels and handlebars to be grasped by the user.

An engine is mounted on the bearing frame, typically a low-power internal combustion engine, which sets both the drive wheels and a power take-off in rotation; a work tool is inserted in the power take-off.

In particular, the drive wheels and/or the power take-off are driven via a driven shaft which is connected to the rotating shaft of motor by a transmission belt. An example of such a tractor, with all the features of the preamble of claim 1, is known from the document DE 33 39 309.

As the walking tractor is used, the transmission belt gradually wears and stretches, progressively losing the tension required for performing an efficient transmission of the drive between the drive shaft and the driven shaft.

For this reason, the transmission belt has to be replaced quite often.

An aim of the present invention is to increase the useful life of the transmission belt of a motorised agricultural tool, by providing a system which enables adequate tension to be maintained notwithstanding the fact that it tends to elongate following use.

A further aim of the invention is to achieve the above-mentioned objective in the ambit of a simple, rational and relatively inexpensive solution.

These objectives are met by providing an agricultural tool with the features of claim 1.

These features provide a very simple solution for slidably mounting the mobile support on the bearing frame, and for constantly pushing the mobile support in the direction of distancing the drive shaft from the driven shaft, in order to keep the transmission belt constantly stretched.

Preferably the mobile support bears the engine, while the driven shaft is installed in a fixed position on the bearing frame.

From a theoretical point of view however the engine could be fixed on the bearing frame while the driven shaft is mounted on a mobile support.

According to an embodiment of the invention, the mobile support is also rotatably mounted on the bearing frame, so as to define a mutual axis of rotation that is parallel to the mutual sliding direction.

This solution advantageously allows the engine to vary its inclination on the agricultural tool, for example when the latter is moving on inclined grounds. Preferably, the tool comprises dismountable constraining means for preventing the mobile support to rotate about said axis of rotation.

In this way, the constraining means can be advantageously mounted or removed, depending on whether it is necessary to allow the engine to vary its inclination on the agricultural tool or not.

Further characteristics and advantages of the invention will emerge from a reading of the following description, which is provided by way of non-limiting example, with the aid of the figures illustrated in the table of drawings, in which:
figure 1 is a prospective view of a walking tractor according an embodiment of the invention;
figure 2 is a back view of the detail II of figure 1.
figure 3 is a transversal section of a portion of a walking tractor of figure 1, made according to the plane passing through the driven shaft and the rotating shaft of the engine;

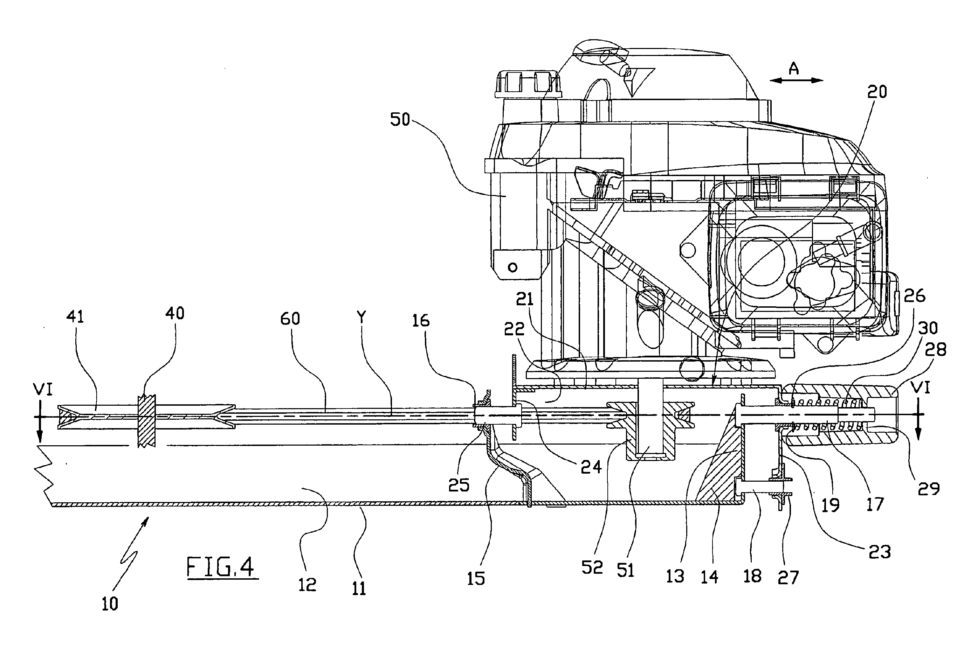

figure 4 is the transversal section of figure 3, shown when the belt is stretched following use;
figure 5 is section V-V of figure 3;

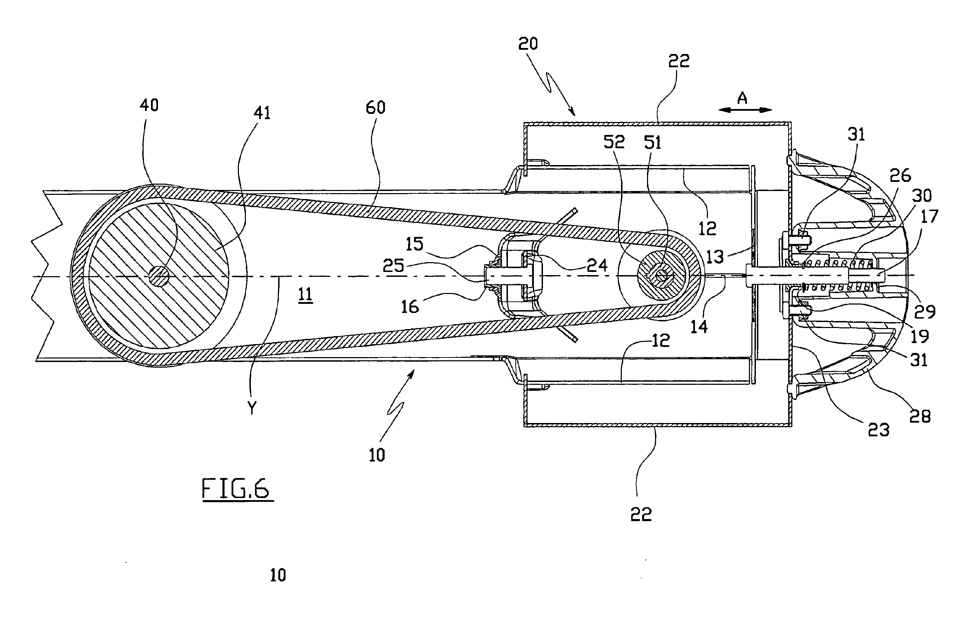

figure 6 is section VI-VI of figure 4;

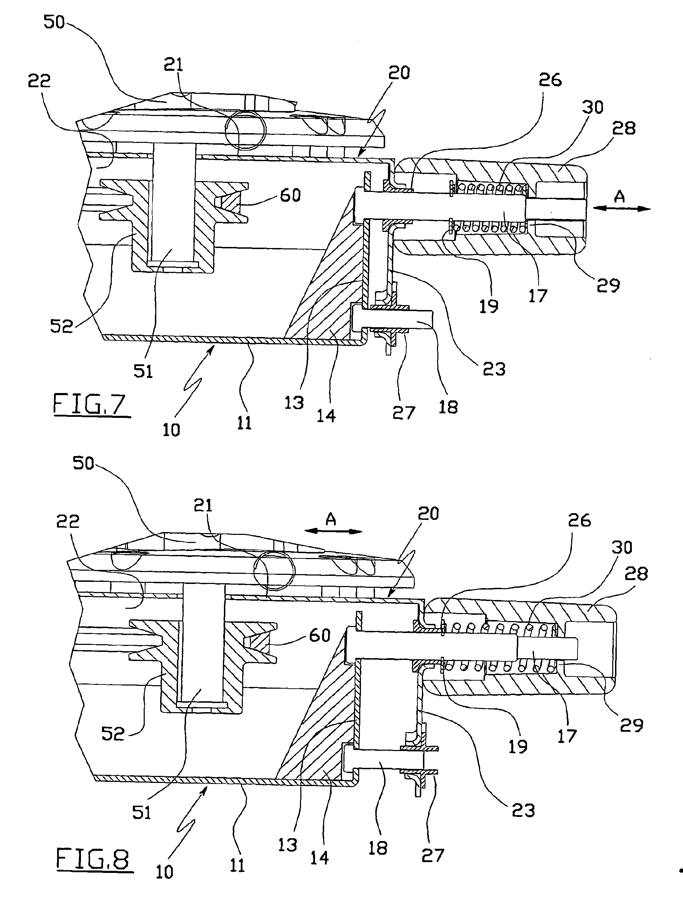

figures 7 and 8 show the same detail, respectively of figure 3 and figure 4; figure 9 is a back view of a walking tractor according to an embodiment of the invention, which operates on an inclined ground.

The walking tractor 1 comprises a bearing frame 2 on which two drive wheels 3 are installed as well as a power take-off to which work tools to be activated and drawn over a terrain are connected.

The work tools that can be inserted on the walking tractor are many in type and are interchangeable on the basis of work to be carried out.

The power take-off and the work tools are not shown, as widely-known.

The bearing frame 2 is normally also provided with a pair of handlebars 4 destined to be gripped by the user for guiding the walking tractor 1 over the ground.

In the illustrated example, the walking tractor 1 frame comprises a sheet metal body 10.

The body 10 comprises a horizontal plane 11 surrounded by a series of rising walls, of which two lateral walls 12 and a front wall 13.

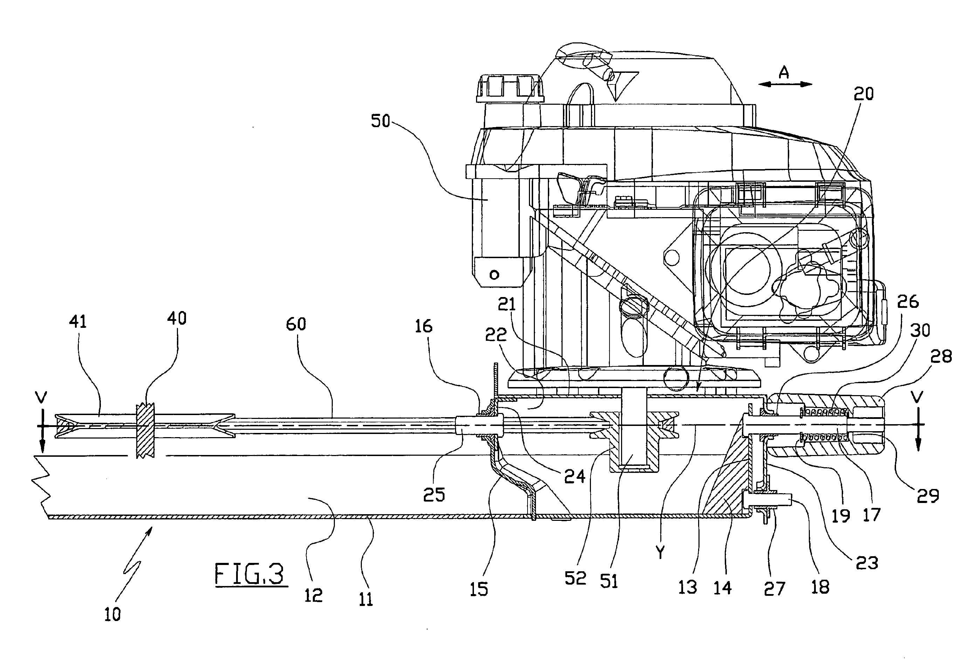

As shown in figure 3, the front wall 13 is stiffened by a triangular sheet 14 which connects it to the plane 11 and is oriented sideways to oppose flexion of the plane 11.

A bracket 15 made of shaped sheet steel is further fixed on the plane 11, which bracket 15 is specially distanced both from the lateral walls 12 and from the rear wall 13.

A horizontal-axis guide bush 16 is fixed to the bracket 15, which guide bush 16 faces the rear wall 13.

Two horizontal-axis pivots are fixed to the rear wall 13, which project externally of the body 10; one is an upper pivot 17 and the other is a lower pivot 18.

Both pivots 17 and 18 are inserted in a respective through-hole in the rear wall 13 and comprise a broadened head which is axially blocked internally of the body 10 between the rear wall 13 and the triangular sheet 14.

In the illustrated example, the upper pivot 17 is coaxial to the guide bush 16. The lower pivot 18 is parallel to and positioned below the upper pivot 17. The walking tractor frame further comprises a slidable support 20 made of profiled sheet metal.

The slidable support 20 comprises a horizontal plane 21, which surmounts the lateral wall 12 and the rear wall 13 of the body 10.

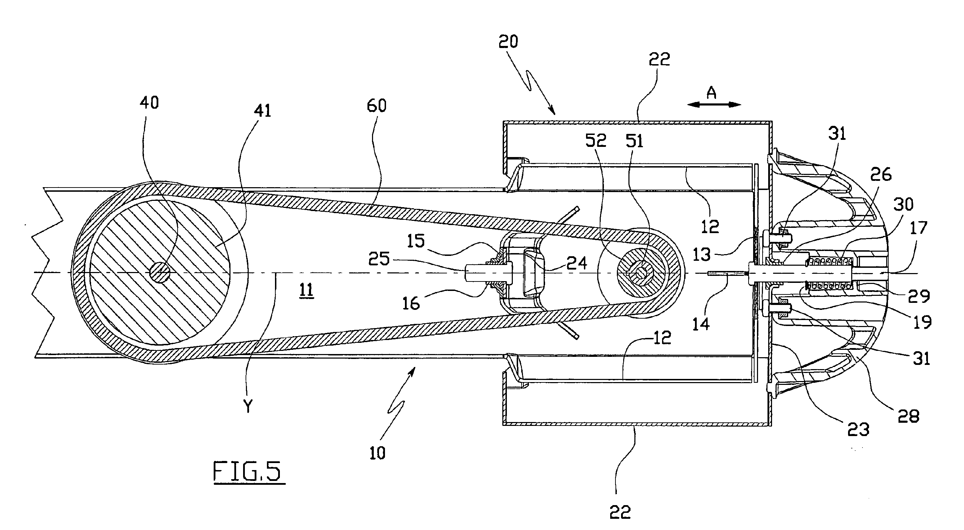

The plane 21 is delimited by a series of descending walls, of which two lateral walls 22 which are external of and face the lateral walls 12 of the body 10 (see figure 5), and a rear wall 23 which is external of and faces the rear wall 13 of the body 10.

The slidable support 20 further comprises a bracket 24 which is fixed below the plane 21 in an opposite and distanced position from the rear wall 23. The bracket 24 is interposed between the rear wall 13 and the bracket 15 of the body 10.

A pivot 25 is fixed to the bracket 24, which pivot 25 projects externally of the slidable support 20 and which is snugly inserted in the guide bush 16.

The pivot 25 is axially blocked to the slidable support 20, for example by welding.

The rear wall 23 of the slidable support comprises two through-slots, each of which houses a guide bush, respectively an upper guide bush 26 and a lower guide bush 27.

The upper guide bush 26 is inserted snugly on the pivot 17 of the body 10, while the lower guide bush 27 is inserted snugly on the pivot 18.

Thanks to this coupling, the slidable support 20 is able to slide on board the body 10 in the horizontal direction A defined by the pivots 17, 18 and 25 and by the relative guide bushes, respectively 16, 26 and 27.

The maximum run of the slidable support 20 is limited in a direction by the bracket 24 which strikes against the bracket 15, and in another direction by the bush 26 which strikes against a seeger ring 19 axially blocked on the pivot 17.

A plastic protection body 28 is further associated to the slidable support 20, which is fixed on the external flank of the rear wall 23 by means of a pair of bolts 31 (see figure 5).

The protection body 28 is internally hollow in order to receive the pivot 17 and enable reciprocal movements.

The cavity of the protection body further houses the seeger ring 19, which is interposed between the guide bush 26 and an abutment 29 of the protection body, which abutment 29 projects internally of the cavity.

A helix spring 30 is compressed between the seeger ring and the abutment 29, which helix spring 30 is wound about the pivot 17.

With reference to figure 3, the spring 30 is destined to push the protection body 28 constantly, and therefore all the slidable body 20, to slide on the body 10 in a rightwards direction.

The spring 30, therefore, constantly pushes the slidable support 20 in the direction of pushing the guide bush 26 to strike against the seeger ring 19.

A vertical-axis driven rotating shaft 40 is rotatably installed on the plane 11 of the body 10.

The rotation axis of the driven shaft 40 is fixed with respect to the plane 11.

Via usual transmission systems (not illustrated), the rotation of the driven shaft 40 enables both the drive wheels 3 and the power take-off of the tractor 1 to be activated.

An engine 50 is installed on the plane 21 of the sliding support 20.

The engine 50 is a low-power internal combustion engine.

The engine 50 comprises a vertical-axis rotating drive shaft 51 which projects below the plane 21.

The axis of the drive shaft 51 and the axis of the driven shaft 40 lie in a same reference plane which is parallel to the sliding direction A of the slidable support 20.

The drive shaft 51 and the driven shaft 40 are connected by a trapezoid transmission belt 60.

The transmission belt 60 is wound on a first pulley 52 keyed on a lower end of the drive shaft 51 and on a second pulley 41 keyed on the upper end of the driven shaft 40.

As illustrated in figure 5, the transmission belt 60 develops in a horizontal plane and surrounds the brackets 15 and 24 which are fixed to the body 10 and to the slidable support 20.

The drive shaft 51 is interposed between the driven shaft 40 and the helix spring 30.

In this way, the helix spring 30 constantly pushes the slidable support 20 in the direction of distancing the drive shaft 51 away from the driven shaft 40, the distancing force being opposed only by the trapezoid belt 60 connecting them.

The length of the transmission belt 60 is chosen such as initially to force the slidable support 20 into a position in which the helix spring 30 is compressed, and in which the distance between the drive shaft 51 and the driven shaft 40 is at a minimum.

As the transmission belt 60 gradually stretches due to wear, the spring 30 pushes the slidable support 20 to slide automatically with respect to the body 10, progressively increasing the distance between the driven shaft 40 and the drive shaft 51, such as to compensate for the lengthening of the belt 60 which thus remains constantly stretched, at least up till when the slidable support 20 reaches the endrun thereof.

Naturally the elastic constant of the spring 30 has to be selected such that even in proximity of the endrun the tension applied to the transmission belt 60 is still sufficient to enable effective transmission of the motion.

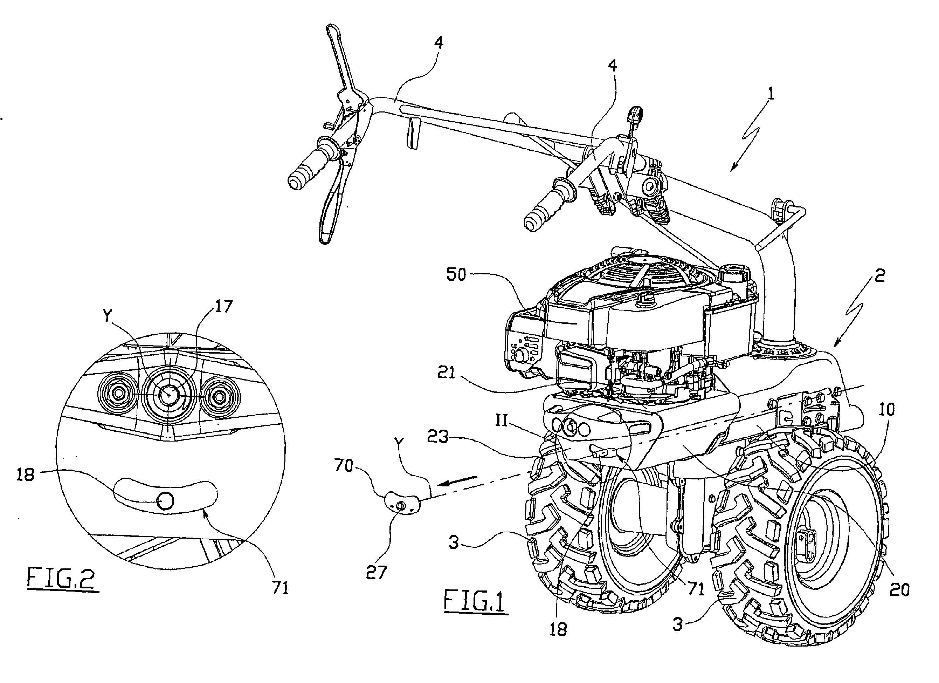

As shown in figure 1, the lower guide bush 27 of the slidable support 20 is fixed on a dismountable cover 70, which is configured to be fixedly engaged in a curved slot 71 of the rear wall 23 of the slidable support 20.

While the dismountable cover 70 is engaged in the curved slot 71, the lower guide bush 27 is positioned below the upper guide bush 26, so that the lower pivot 18 constrains the slidable support 20, the engine 50 and the drive shaft 51 to maintain the predetermined orientation with respect to the body 10. Conversely, when the dismountable cover 70 is disassembled, the lower pivot 18 is directly accommodated inside the curved slot 71.

As shown in figure 2, the curvature of the curved slot 71 is centred on the axis of the upper pivot 17.

As a consequence, since the upper pivot 17 is coaxial with the opposite pivot 25, the slidable support 20 is free to oscillate about the rotational axis Y defined by the axis of the pivots 17 and 25.

Therefore, when the cover 70 is disassembled, the slidable support 20, the engine 50 and the drive shaft 51 can vary their orientation with respect to both the body 10 and the bearing frame 2.

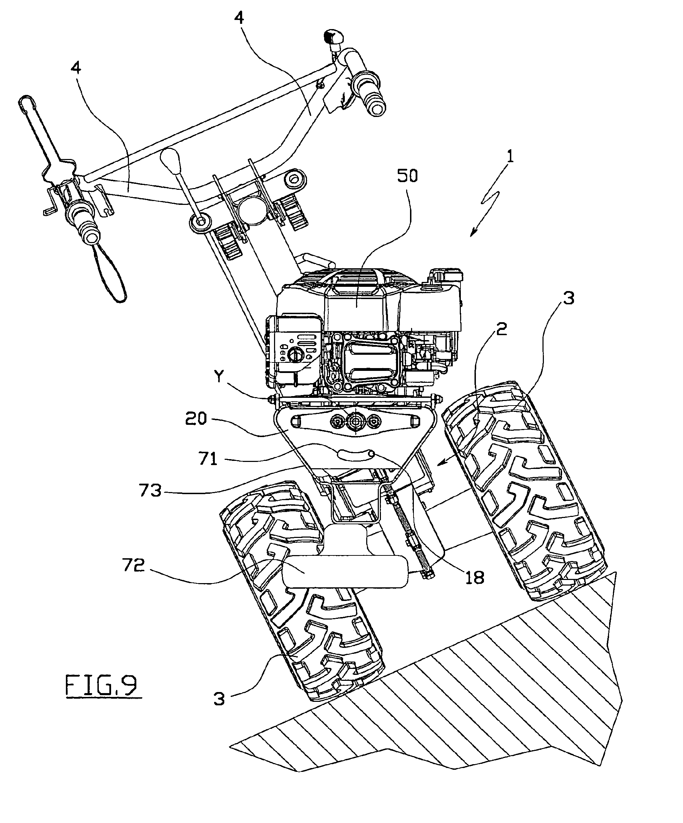

As shown in figure 9, the walking tractor 1 can be equipped with an heavy ballast 72, which is fixed to the sliding support 20 by means of a bracket 73, so that the centre of gravity of the assembly comprising the sliding support 20, the engine 50 and the ballast 72, is located below the axis of rotation Y defined by the pivots 17 and 25.

As a consequence, when the walking tractor 1 is moving on an inclined ground and the cover 70 is disassembled, as it is shown in figure 9, the sliding support 20 automatically rotates about the pivots 17 and 25, due to the gravity, so that the engine 50 and the drive shaft 51 always maintain a vertical orientation.

This feature advantageously improve the operation of the engine 50. Obviously a technical expert in the sector might bring numerous modifications of a technical-applicational nature to the walking tractor as described above, without its forsaking the ambit of the invention as claimed herein below.

## Claims

1. An agricultural tool comprising a bearing frame (10), a rotating driven shaft (40), an engine (50) provided with a rotating drive shaft (51) and a transmission belt (60) destined to connect the driven shaft (40) with the drive shaft (51), wherein the agricultural tool further comprises at least a mobile support (20), which is slidably mounted on the bearing frame (10) in order to vary a reciprocal distance between the drive shaft (51) and the driven shaft (40), and means (30) for pushing the mobile support (20) in a direction which distances the drive shaft (51) from the driven shaft (40) in opposition to the transmission belt (60) which connects them, **characterised in that** the mobile support (20) comprises at least a guide bush (26), which is slidably inserted on a pivot (17) of the bearing frame (10), and a casing (28) destined to house a portion of the pivot (17) which projects from the guide bush (26), and **in that** the means for pushing the mobile support (20) comprise at least a spring (30) which is interposed between an external abutment (19) of the projecting part of the pivot (17) and an internal abutment (29) of the casing (28).

2. The tool of claim 1, **characterised in that** the mobile support (20) bears the engine (50).

3. The tool of claim 1, **characterised in that** the spring is a helix spring.

4. The tool of claim 1, **characterised in that** the external abutment of the pivot (17) is defined by a seeger ring (19) keyed on the pivot (17).

5. The tool of claim 1, **characterised in that** the mobile support (20) is also rotatably mounted on the bearing frame (10), so as to define a mutual axis of rotation (Y) that is parallel to the mutual sliding direction.

6. The tool of claim 5, comprising dismountable constraining means (27, 70) for preventing the mobile support (20) to rotate about said axis of rotation (Y).

## Patentansprüche

1. Landwirtschaftliches Werkzeug, umfassend einen Tragrahmen (10), eine rotierende angetriebene Welle (40), einen mit einer rotierenden Antriebswelle(51) versehenen Motor (50) und einen Treibriemen (60), der dazu bestimmt ist, die angetriebene Welle (40) mit der Antriebswelle (51) zu verbinden, wobei das landwirtschaftliche Werkzeug ferner mindestens einen beweglichen Support (20), der verschiebbar auf den Tragrahmen (10) montiert ist, um einen gegenseitigen Abstand zwischen der Antriebswelle (51) und der angetriebenen Welle (40) zu ändern, und Mittel (30) zum Schieben des beweglichen Supports (20) in eine Richtung umfasst, welche die Antriebswelle (51) von der angetriebenen Welle (40) gegen den Widerstand des sie verbindenden Treibriemens (60) beabstandet, **dadurch gekennzeichnet, dass** der bewegliche Support (20) mindestens eine verschiebbar auf einen Zapfen (17) des Tragrahmens (10) aufgesteckte Führungsbuchse (26) und ein Gehäuse (28) umfasst, das dazu bestimmt ist, einen Teil des Zapfens (17) zu beherbergen, der aus der Führungsbuchse (26) herausragt, und **dadurch**, dass die Mittel zum Schieben des beweglichen Supports (20) mindestens eine Feder (30) umfassen, die zwischen ein äußeres Widerlager (19) des herausragenden Teils des Zapfens (17) und ein inneres Widerlager (29) des Gehäuses (28) eingefügt ist.

2. Werkzeug nach Anspruch 1, **dadurch gekennzeichnet, dass** der bewegliche Support (20) den Motor (50) trägt.

3. Werkzeug nach Anspruch 1, **dadurch gekennzeichnet, dass** die Feder eine Schraubenfeder ist.

4. Werkzeug nach Anspruch 1, **dadurch gekennzeichnet, dass** das äußere Widerlager des Zapfens (17) durch einen Seegerring (19) definiert wird, der auf den Zapfen (17) aufgezogen ist.

5. Werkzeug nach Anspruch 1, **dadurch gekennzeichnet, dass** der bewegliche Support (20) außerdem drehbar auf den Tragrahmen (10) montiert ist, so dass eine gegenseitige Drehachse (Y) definiert wird, die parallel zur Richtung der gegenseitigen Verschiebung ist.

6. Werkzeug nach Anspruch 5, das lösbare Haltemittel (27, 70) umfasst, um zu verhindern, dass sich der bewegliche Support (20) um die Drehachse (Y) dreht.

## Revendications

1. Outil agricole comprenant un châssis porteur (10), un arbre entraîné tournant (40), un moteur (50) muni d'un arbre d'entraînement tournant (51) et d'une courroie de transmission (60) destinée à relier l'arbre entraîné (40) avec l'arbre d'entraînement (51), dans lequel l'outil agricole comprend en outre au moins un support mobile (20), qui est monté de manière coulissante sur le châssis porteur (10) de manière à faire varier une distance réciproque entre l'arbre d'entraînement (51) et l'arbre entraîné (40), et des moyens (30) pour pousser le support mobile (20) dans une direction qui éloigne l'arbre d'entraînement (51) de l'arbre entraîné (40) en opposition à la courroie de transmission (60) qui les relie, **caractérisé en ce que** le support mobile (20) comprend au moins une bague de guidage (26), qui est insérée de manière coulissante sur un pivot (17) du châssis porteur (10), et un boîtier (28) destiné à loger une portion du pivot (17) qui fait saillie par rapport à la bague de guidage (26), et **en ce que** les moyens pour pousser le support mobile (20) comprennent au moins un ressort (30) qui est interposé entre une butée externe (19) de la partie en saillie du pivot (17) et une butée interne (29) du boîtier (28).

2. Outil selon la revendication 1, **caractérisé en ce que** le support mobile (20) supporte le moteur (50).

3. Outil selon la revendication 1, **caractérisé en ce que** le ressort est un ressort hélicoïdal.

4. Outil selon la revendication 1, **caractérisé en ce que** la butée externe du pivot (17) est définie par un anneau Seeger (19) claveté sur le pivot (17).

5. Outil selon la revendication 1, **caractérisé en ce que** le support mobile (20) est également monté de manière rotative sur le châssis porteur (10), de manière à définir un axe de rotation mutuelle (Y) qui est parallèle à la direction de coulissement mutuel.

6. Outil selon la revendication 5, comprenant des moyens de blocage démontables (27, 70) pour empêcher le support mobile (20) de tourner autour dudit axe de rotation (Y).
